# DEMANDE DE BREVET EUROPEEN

(11) **EP 2 597 556 A1**
(43) Date de publication de la demande: **29.05.2013**
(21) Numéro de dépôt: 12185272.7
(22) Date de dépôt: 20.09.2012
(51) Int. Cl.: G06F 3/048, G06F 3/0481, G06F 3/0485

(54) **Procédé d'affichage d'un contenu numérique sur un écran**

(30) Priorité: 29.09.2011 FR 1158765
(71) Demandeur: France Télécom, 75015 Paris (FR)
(72) Inventeur: Auvray, Vincent, 50460 Tonneville (FR); Arslan, Yunus, 14000 Caen (FR); Groult, Rémi, 14000 Caen (FR)

(57) **Abrégé**

L'invention a trait à un procédé d'affichage d'un contenu numérique (CNT) sur un écran d'un terminal, caractérisé en ce qu'il comprend les étapes suivantes:
- une étape de création de zones (Z1,Z2,Z3) issues du contenu (CNT) ;
- une étape d'affichage des zones successivement sur l'écran.

## Description

### Domaine technique

L'invention se rapporte à un procédé d'affichage d'un contenu numérique sur un écran.

L'invention s'applique à tous contenus numériques aptes à être affichés sur un écran d'un terminal.

Rappelons qu'un terminal est équipé de ressources physiques et logicielles incluant un processeur apte à traiter des données numériques. L'invention s'applique tout particulièrement aux terminaux équipés d'un écran dont la taille est telle que la visualisation de l'ensemble du contenu nécessite des déplacements du contenu sur l'écran.

### Etat de la technique

La lecture de contenus numériques sur écran d'ordinateur portatifs tels des téléphones mobiles de type ordiphone (traduction française du terme anglais smartphone) est en phase de forte croissance. Cette croissance a débuté avec les livres numériques.

La diversification des contenus permet aujourd'hui d'acheter des journaux, des magazines,... et de lire ces contenus sur des écrans de taille réduite.

Les contenus en question ont conservé le format des contenus papiers. Le problème est que l'écran d'une grande majorité d'ordinateurs portatifs a une dimension inférieure à un contenu. L'étape de lecture de contenu grands formats numérisés sur des petits écrans, par exemple de quatre pouces de diagonale, suppose donc des capacités de zoom et de déplacement dans le contenu qui soient fluides et ergonomiques.

Aussi, plus le contenu est de grande taille et l'écran petit, plus la manipulation du contenu et donc sa lecture devient complexe et frustrant pour un utilisateur.

L'invention offre une solution ne présentant pas les inconvénients de l'état de la technique.

### L'invention

A cet effet, selon un aspect fonctionnel, l'invention a pour objet un procédé de lecture d'un contenu numérique sur un écran d'un terminal, **caractérisé en ce qu'il** comprend les étapes suivantes:
- une étape de création de zones issues du contenu ;
- une étape d'affichage des zones successivement.

Selon l'invention, un contenu numérique est divisé en zones chaque zone pouvant être lue individuellement et successivement. Ainsi, l'invention offre l'avantage, moyennant une étape préalable de création de zones, de pouvoir consulter un contenu en visualisant chaque zone individuellement et en continu. L'invention évite ainsi des manipulations pendant l'affichage et donc pendant la lecture d'un contenu.

Selon un mode de mise en oeuvre particulier de l'invention, à une zone est associé un niveau de zoom respectif de façon à afficher successivement les zones avec le niveau de zoom respectif. Ainsi, lors de l'affichage du contenu, les zones sont affichées l'une après l'autre avec un niveau de zoom adapté. L'affichage est donc amélioré car les zones sont affichées sans que l'utilisateur ait besoin de déplacer le contenu sur l'écran, en particulier lorsque le contenu a une taille plus grande que l'écran. De plus, le niveau de zoom est choisi de préférence de telle sorte que la zone, et donc les caractères affichés, soit lisible par un utilisateur.

Selon un deuxième mode de mise en oeuvre particulier de l'invention, qui pourra être mis en oeuvre alternativement ou cumulativement avec le précédent, l'étape d'affichage des zones comprend pour chaque zone à afficher les sous-étapes suivantes
- Une sous-étape de réalisation d'un effet de rapprochement pour afficher une zone avec le niveau de zoom prédéfini associé à la zone en question;
- Une sous-étape d'affichage au cours de laquelle la zone défile sur l'écran à une vitesse donnée;
- Suivi, suite à l'affichage, d'une sous-étape de réalisation d'un effet d'éloignement de la zone affichée.

Ce deuxième mode permet, lors de l'affichage, en particulier lors du passage d'une zone vers une autre de situer la zone dans le contenu.

Précisons ici qu'un effet de rapprochement/éloignement d'une zone ou plus généralement d'un contenu a pour conséquence d'agrandir/de rapetisser sur l'écran la zone ou le contenu en question, respectivement.

Selon un troisième mode de mise en oeuvre particulier de l'invention, qui pourra être mis en oeuvre alternativement ou cumulativement avec les précédents, une zone et l'écran ont des formes rectangulaires ayant deux côtés verticaux et deux côtés horizontaux respectifs. Dans cette configuration, si le côté horizontal de la zone a une longueur supérieure au côté horizontal de l'écran, un défilement de la zone selon un axe horizontal est effectué. De cette façon, un utilisateur peut visualiser la zone sans que cela nécessite une action de défilement selon l'axe horizontal.

Selon un quatrième mode de mise en oeuvre particulier de l'invention, qui pourra être mis en oeuvre alternativement ou cumulativement avec les précédents, les zones sont affichées successivement en respectant l'ordre des zones sélectionnées lors de l'étape de création. Ainsi, la création des zones peut être choisie judicieusement par exemple par ordre de préférence.

Selon un aspect matériel, l'invention concerne également un terminal comprenant un écran pour la visualisation d'un contenu numérique, **caractérisé en ce qu'il** comprend
- des moyens de création de zones issues du contenu ;
- des moyens d'affichage des zones successivement.

Selon un autre aspect matériel, l'invention concerne également un programme d'ordinateur apte à être mise en oeuvre sur un terminal tel que défini ci-dessus, ledit programme comprenant des instructions de code qui, lorsque le programme est exécuté par un processeur, réalise les étapes du procédé définies ci-dessus à savoir:
- une étape de création de zones issues du contenu
- une étape d'affichage des zones successivement.

L'invention sera mieux comprise à la lecture de la description qui suit, donnée à titre d'exemple et faite en référence aux dessins annexés.

### Les figures:

La figure 1 représente un système informatique sur lequel l'invention peut être mise en oeuvre.
La figure 2 est une vue d'un contenu sur lequel les zones définies ci-dessus sont illustrées.
La figure 3 est une vue schématique de la taille d'un contenu par rapport à un écran.
La figure 4 représente un organigramme illustrant les différentes étapes d'un mode de mise en oeuvre du procédé de l'invention.
Les figures 5a à 5c illustrent trois vues de l'écran sur lequel sont affichées des zones durant un affichage du contenu.
La figure 6 représente un organigramme illustrant les différentes étapes d'un autre mode de mise en oeuvre de procédé de l'invention.
La figure 7 représente un organigramme illustrant les différentes étapes d'un autre mode de mise en oeuvre de procédé de l'invention.
Les figures 8 et 9 représentent un autre exemple de réalisation et les affichages qui en résultent sur l'écran, respectivement.
Les figures 10 et 11 représentent également un autre exemple de réalisation et les affichages qui en résultent sur l'écran, respectivement.

### Description détaillée de modes de réalisation illustrant l'invention

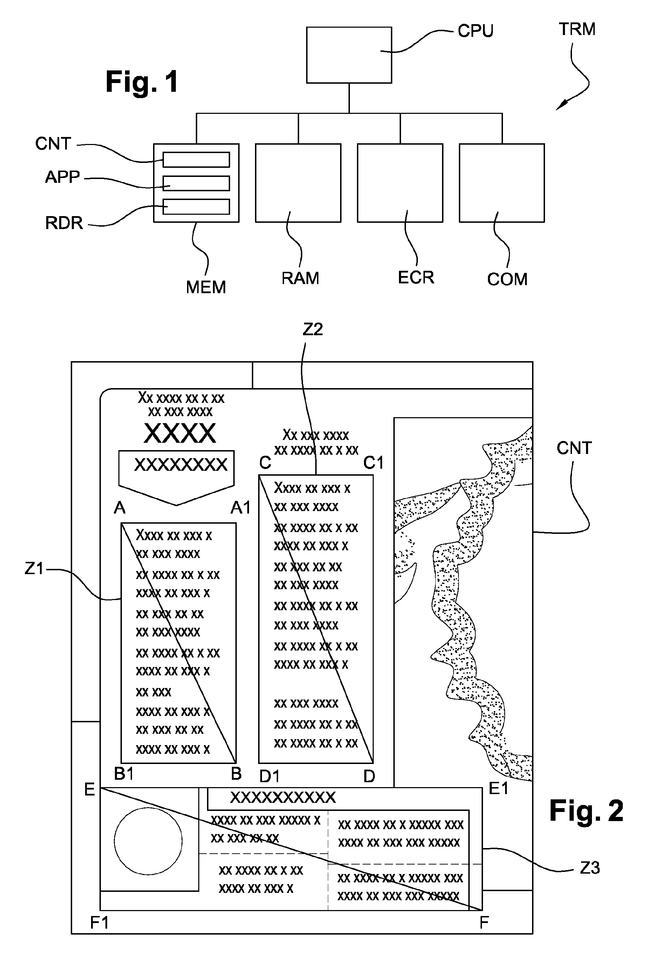

La figure 1 représente un terminal TRM équipé d'un microprocesseur CPU relié par l'intermédiaire d'un bus BUS à une mémoire de stockage non volatile MEM, une mémoire vive RAM, un écran ECR, des moyens de commande CLV tel qu'un clavier, et des moyens de communication COM aptes à recevoir un contenu CNT à afficher.

Rappelons que l'invention s'applique tout particulièrement aux contenus dont la lecture nécessite une action de défilement du contenu sur l'écran par exemple de la part d'un utilisateur, une action pouvant être réalisée par exemple par le biais d'une manipulation sur l'écran si celui-ci est tactile ou par une action sur les touches d'un clavier du terminal si celui-ci est équipé d'un clavier CLV. Un tel contenu est typiquement une page au format JPEG (sigle anglo-saxon de Joint Photographic Experts Group), mais pourrait être une page au format PDF (sigle anglo-saxon de Portable Document Format) ou HTML ou XHTML, ou autres.

Dans notre exemple le contenu comprend une page JPEG. L'invention ne se limite bien évidemment pas à une page mais peut s'étendre à un nombre illimité de pages.

Le microprocesseur CPU est apte à commander l'affichage sur l'écran d'un contenu numérique CNT. Le terminal comprend à cet effet un module de lecture RDR apte à afficher un contenu sur l'écran à réception d'une commande d'affichage issue du microprocesseur CPU. Dans notre exemple, le module de lecture RDR est un programme apte à afficher des fichiers au format de type JPEG.

Afin d'illustrer l'invention, en référence à la figure 2, supposons que le contenu CNT ait une forme rectangulaire. Un point de l'écran peut être par exemple repéré au moyen d'un repère (O,X,Y) dont l'unité est un pixel.

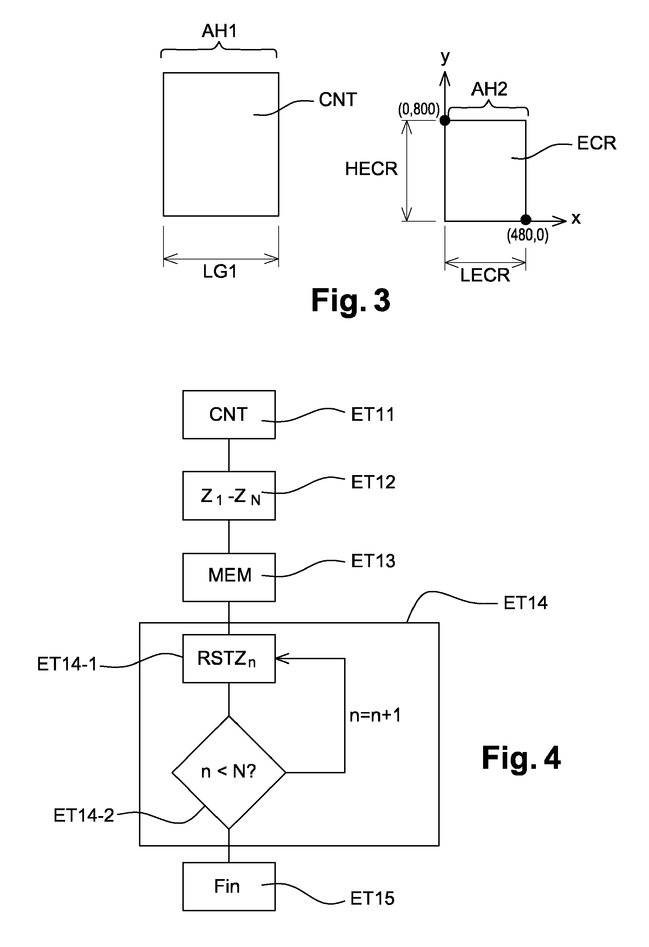

Supposons également, en référence à la figure 3, que l'écran ECR soit également rectangulaire et que la longueur LECR d'un côté horizontal AH2 de l'écran soit inférieure à la longueur LG1 d'un côté horizontal AH1 du contenu. Dans notre exemple, l'écran comporte 480 pixels de large et 800 pixels de haut. Sur la figure 3, l'écran est représenté en mode portrait.

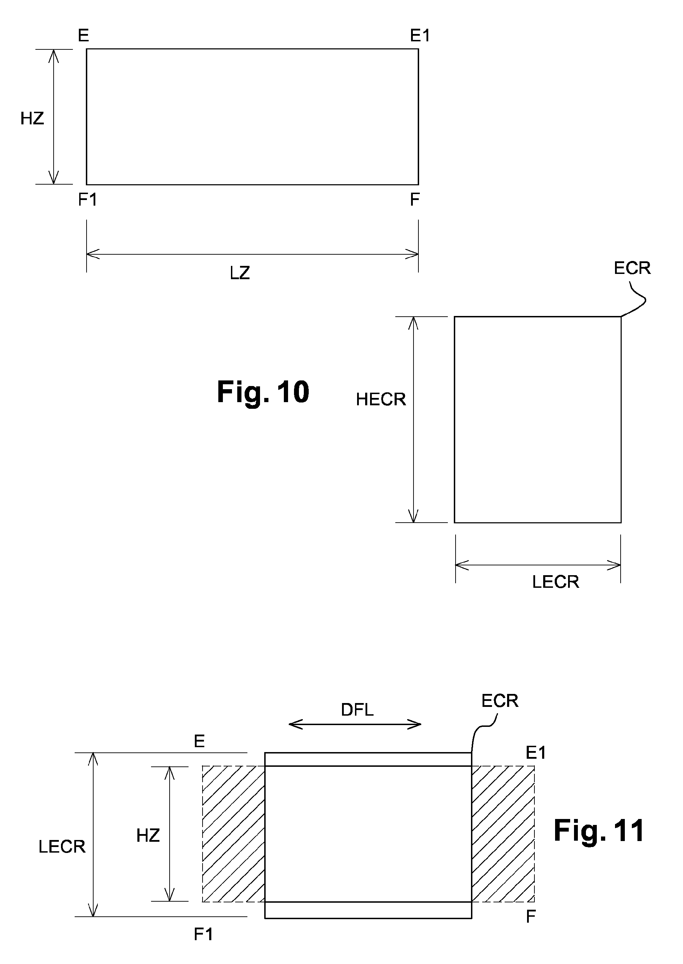

Rappelons ici qu'un écran est dit en mode paysage lorsque l'orientation de l'écran, ou l'orientation de l'affichage sur l'écran, dans l'espace, est telle que la hauteur de l'écran, ou du contenu affiché sur l'écran, est inférieure à sa longueur LECR. La figure 11 illustre cette configuration. A l'inverse, un écran est dit en mode portrait lorsque l'orientation de l'écran dans l'espace est telle que la hauteur de l'écran HECR est supérieure à sa longueur LECR.

On comprend de ce qui précède que la consultation d'un contenu sur l'écran ECR nécessite un déplacement ou défilement du contenu sur l'écran. Aussi, la consultation peut nécessiter un effet de rapprochement (ou zoom) ou un effet d'éloignement du contenu sur l'écran ECR.

Selon l'invention, afin d'éviter des actions de défilement du contenu sur l'écran, une étape de création a lieu au cours de laquelle des zones Z1-Zn sont créées dans le contenu en vue d'un affichage des zones sur l'écran successivement. Ainsi, les zones vont être affichées successivement les unes après les autres sur l'écran.

La création consiste, pour un utilisateur, à sélectionner des parties du contenu CNT.

Dans notre exemple, les zones créées sont au nombre de trois (n=3), à savoir une première zone Z1, une deuxième zone Z2, et une troisième zone Z3.

La première zone Z1 a un premier côté horizontal supérieure A-A1 et une deuxième côté horizontal inférieur B-B1.

La deuxième zone Z2 a un premier côté horizontal supérieur C-C1 et un deuxième côté horizontal inférieur D-D1.

La troisième zone Z3 a un premier côté horizontal supérieur E-E1 et un deuxième côté horizontal inférieur F-F1.

Divers modes de réalisation, et variantes associées, vont être décrits dans la suite. A chaque mode correspond des étapes référencées ETnk, n référençant le mode et k l'étape. Aussi une étape peut être décomposée en plusieurs autres étapes qui seront désignées par l'expression "sous-étapes" et seront référencées ETnk-j, j désignant la sous-étape en question.

A noter que n, k, j sont des nombres entiers.

Un premier mode de mise en oeuvre va maintenant être décrit en référence à la figure 4. Cette dernière est un algorithme incluant plusieurs étapes référencées ET11 à ET15.

Lors d'une première étape ET11, un contenu CNT est créé afin d'être restitué. Ce contenu est par exemple un magazine.

Dans notre exemple, la création entraîne l'exécution d'un programme APP permettant la création de zones dans le contenu en vue de leur affichage sur l'écran.

Lors d'une deuxième étape ET12, des zones Z1 à Zn sont créées. Dans notre exemple, les trois zones Z1 à Z3 décrites ci-dessus sont créées. La méthode utilisée pour la création d'une zone est quelconque. Par exemple, si une souris informatique est utilisée, la création peut consister à sélectionner deux points de l'écran, A et B par exemple pour la première zone. Le programme APP se charge ensuite de constituer le rectangle, ou toute autre forme géométrique, formant la première zone Z1 (A A1 B B1). La forme rectangulaire est préférée ici car la plupart des écrans actuels sont rectangulaires.

Une fois la création de zones effectuée, los d'une troisième étape ET13, les coordonnées des zones sont mémorisées dans la mémoire MEM.

Suite à la mémorisation, lors d'une quatrième étape ET14, le programme APP débute l'affichage. Lors de cette quatrième étape ET14, le programme RDR est exécuté ; suite à l'exécution, les trois zones sélectionnées lors de la création de zones sont affichées successivement les unes après les autres, et ce automatiquement. A cette fin, le programme réalise en boucle pour chaque zone deux sous-étapes ET14-1 et ET14-2. Dans notre exemple, les zones sont affichées successivement en respectant l'ordre des zones sélectionnées lors de l'étape de création.

Lors d'une sous-étape ET14-1, une première zone Z1 est affichée à l'écran.

Suite à l'affichage, lors d'une sous-étape ET14-2, le programme RDR détermine si une autre zone doit être affichée.

Dans l'affirmative, la sous-étape ET14-1 est de nouveau réalisée avec la zone suivante, et ainsi de suite jusque la dernière zone, qui dans notre exemple est la troisième zone Z3.

Dans notre exemple, lors d'une cinquième étape ET15, après affichage de la troisième zone Z3, le procédé prend fin.

Dans notre exemple, lorsque le côté vertical ou horizontal d'une zone excède en longueur le côté vertical ou horizontale de l'écran, respectivement, à l'image d'un prompteur, la zone défile automatiquement sur l'écran verticalement ou horizontalement à une vitesse automatique ou définie au préalable par exemple par un utilisateur du terminal.

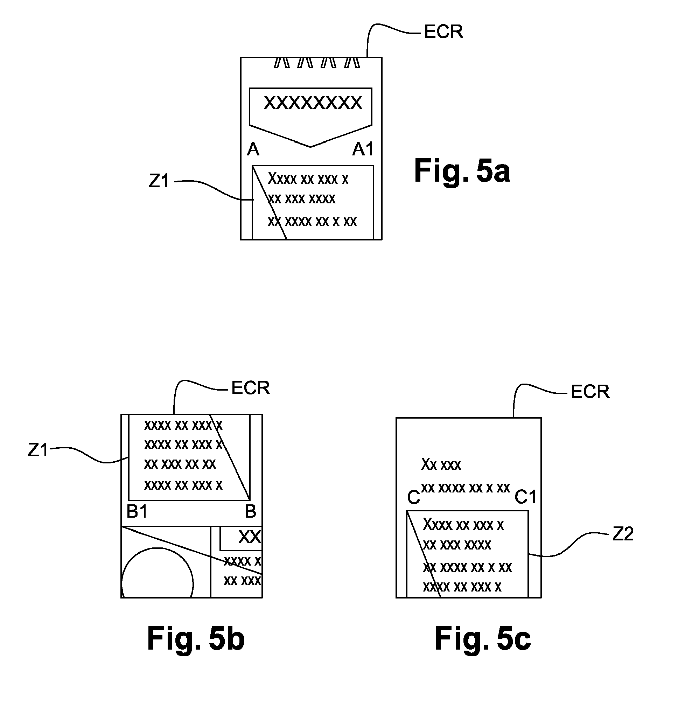

Les figures 5a à 5c illustrent le cas où les côtés horizontaux des zones et de l'écran, une fois l'effet de rapprochement réalisé, ont des longueurs qui se correspondent et où le côté vertical des zones est plus long que le côté vertical de l'écran. De préférence, une zone est incluse dans l'écran ; en d'autres mots, le niveau de zoom est choisi de telle sorte que le côté horizontal d'une zone a une longueur inférieure au côté horizontal de l'écran.

Précisons ici que, dans le contexte de l'invention, deux longueurs se correspondent entre elles lorsqu'elles sont égales ou différentes de quelques millimètres.

La figure 5a illustre l'instant de démarrage de l'affichage de la première zone Z1. Dans notre exemple, le côté A-A1 de la première zone Z1 est positionné au centre de l'écran mais pourrait être positionnée ailleurs sur l'écran.

Ensuite, un défilement vertical de la zone prend place à une vitesse prédéfinie. La figure 5b illustre l'instant correspondant à la fin de l'affichage de la première zone Z1. A cet instant, le côté B1-B de la première zone Z1 se situe vers le centre de l'écran.

Ensuite, suite à l'affichage de la première zone Z1, les sous-étapes ET41 et ET42 sont de nouveau exécutées pour la deuxième zone Z2.

La figure 5c illustre l'instant de démarrage de l'affichage de la deuxième zone Z2. Dans notre exemple, le côté C-C1 de la zone Z2 est positionné au centre de l'écran.

Dans notre exemple, les zones sont affichées successivement en respectant l'ordre des zones sélectionnées lors de l'étape de création.

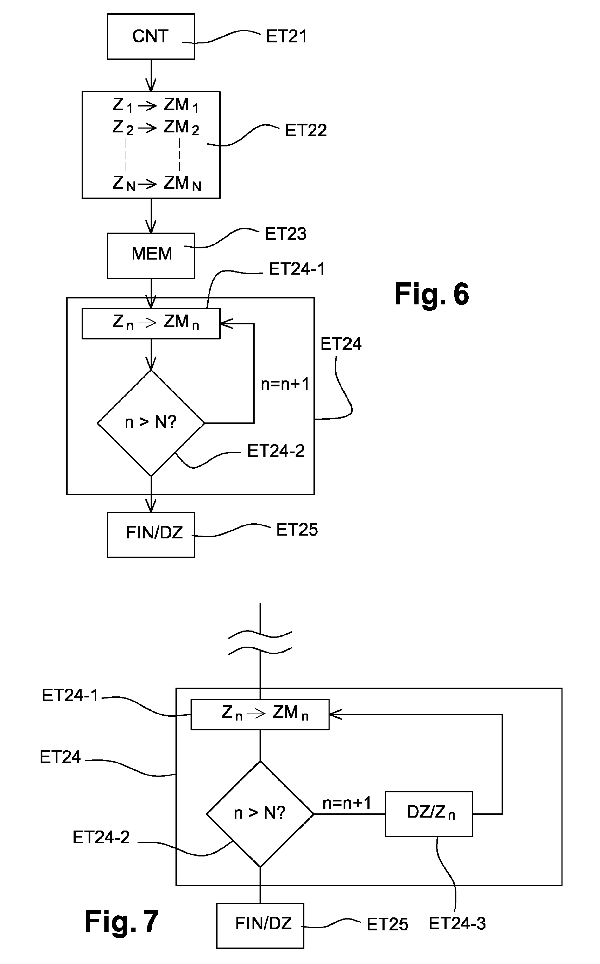

La figure 6 illustre un deuxième mode de mise en oeuvre. Selon cette variante, à une zone est associé un niveau de zoom respectif de façon à afficher successivement les zones avec le niveau de zoom défini pour la zone. Dans notre exemple, le niveau de zoom lié une zone est choisie de telle sorte que la lecture de la zone est possible ; en d'autres mots, un niveau de zoom judicieusement choisi permet l'affichage de caractères d'une taille suffisamment grande pour permettre une lecture agréable de la zone.

Dans ce mode de mise en oeuvre, la première étape ET21 est la même que la première étape ET11 relative au mode de mise en oeuvre décrit en référence à la figure 4.

Lors d'une deuxième étape ET22 de ce deuxième mode, dans notre exemple, aux trois zones créées Z1 à Z3 correspond trois niveaux de zoom respectifs, à savoir un premier niveau de zoom ZM1, un deuxième niveau de zoom ZM2, et un troisième niveau de zoom ZM3.

Une fois la création effectuée, los d'une troisième étape ET23 de ce deuxième mode, les coordonnées des zones ainsi que les niveaux de zoom respectifs sont mémorisées dans la mémoire MEM.

Suite à la mémorisation, lors d'une quatrième étape ET24, le programme RDR débute l'affichage. Lors de cette quatrième étape, les trois zones créées sont affichées successivement les unes après les autres avec le niveau de zoom prédéfini. A cette fin, le programme RDR réalise en boucle, pour chaque zone, deux sous-étapes ET24-1 et ET24-2.

Lors d'une sous-étape ET24-1, une première zone Z1 est affichée avec le premier niveau de zoom ZM1.

Suite à l'affichage de la première zone Z1, lors d'une sous-étape ET24-2, le programme détermine si une autre zone doit être affichée. Dans l'affirmative, la sous-étape ET24-1 est de nouveau réalisée avec la zone suivante Z2, et ainsi de suite jusque la dernière zone Z3 dans notre exemple.

Dans notre exemple, lors d'une cinquième étape ET25, après affichage de la dernière zone à savoir la troisième zone Z3, le procédé d'affichage prend fin (END).

Nous venons de voir qu'à chaque zone correspond un niveau de zoom. Dans notre exemple, le niveau de zoom est choisi en fonction à la fois du côté horizontal de la zone à afficher et du côté horizontal de l'écran de telle sorte que lors de l'affichage les deux côtés soient approximativement de la même longueur.

Selon une variante applicable aux deux modes décrits précédemment, et en référence à l'algorithme de la figure 7, lors du passage d'une zone à une autre, lors d'une étape ET24-3, le programme réalise un effet d'éloignement suivi d'un effet de rapprochement de façon à s'éloigner dans un premier temps d'une zone qui a été affichée. Ensuite à l'étape ET24-1, un effet de rapprochement est réalisé dans un second temps afin de réaliser un effet de rapprochement vers la zone suivante à afficher. Cet effet a pour avantage de situer dans un premier temps la zone qui a été affichée par rapport au contenu CNT et dans un second temps la zone suivante à afficher par rapport au même contenu CNT. En l'espèce, la quatrième étape du deuxième mode est modifiée comme suit: Une troisième sous-étape ET24-3 fait suite à la deuxième sous-étape ET24-2, s'il reste des zones à afficher, le processeur commande un effet d'éloignement suite à l'affichage et ensuite un effet de rapprochement vers la zone à afficher.

Selon une autre variante, le zoom ajustera automatiquement la plus petite dimension de la zone (entre côté horizontal et vertical) à la dimension horizontale ou verticale de l'écran. De préférence, le niveau de zoom est choisi de telle sorte que la taille des caractères à afficher est suffisante pour la lecture. Dans la négative, l'affichage peut être suivi d'une action de la part de l'utilisateur lecteur de la zone, l'action pouvant consister en un rapprochement ou d'éloignement de la zone.

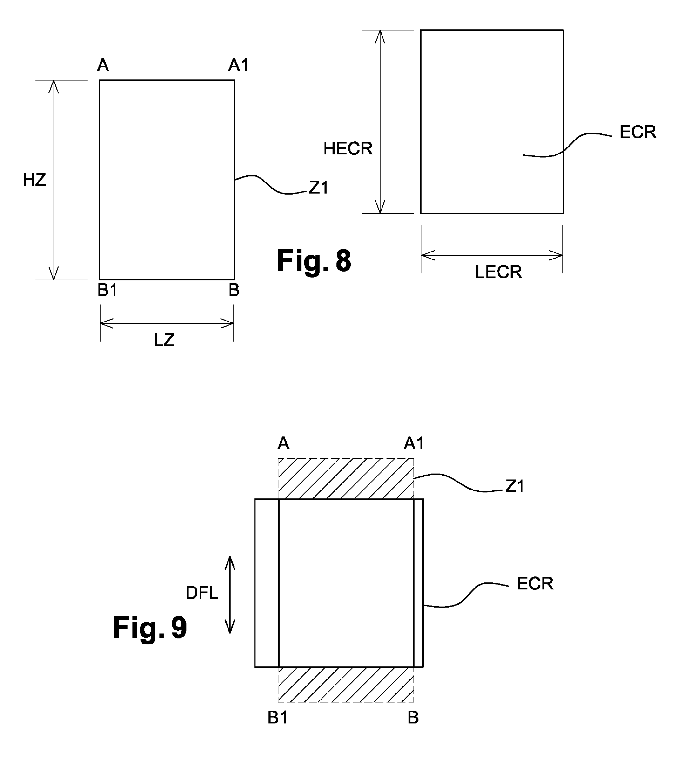

Des exemples vont être décrits en référence aux figures 8 à 11. Sur ces figures, les parties d'une zone en pointillé et hachurée représentent les parties d'une zone qui ne sont pas affichées à l'écran et pour lesquelles un affichage sur l'écran nécessite un défilement (ou déplacement) de la zone sur l'écran.

Ainsi, en référence aux figures 8 et 9, si une zone (par exemple la première zone Z1) a une dimension telle que la longueur HZ d'un côté vertical de la zone est plus grande que la longueur LZ d'un côté horizontal, le zoom s'effectuera en mode portrait, en faisant en sorte que le côté horizontal de la zone soit approximativement de même longueur que le côté horizontal de l'écran lorsque l'écran est en mode portrait, voire inférieure. Dans cette configuration le défilement DFL automatique de la zone en question sera vertical.

Aussi, selon, une autre variante, en référence aux figures 10 et 11, si la zone a une dimension telle que la longueur HZ d'un côté vertical de la zone est inférieure à la longueur LZ d'un côté horizontal de la zone, et si la longueur d'un côté vertical de la zone est inférieure à la longueur LECR d'un côté horizontal de l'écran lorsque ce dernier est orienté en mode portait, l'affichage de la zone s'effectuera sur l'écran en mode paysage. Dans cette configuration, le défilement DFL automatique sera horizontal. Grâce à cette variante, la lecture de la zone se fera d'autant plus facilement car la taille des caractères choisie peut être plus grande grâce au mode paysage. Dans cette configuration, la zone peut défiler horizontalement.

Pour la réalisation de l'invention, le terminal comprend des moyens pour réaliser les étapes suivantes :
- Une sous-étape de réalisation d'un effet de rapprochement pour afficher une zone (Zn) avec le niveau de zoom prédéfini associé à la zone en question;
- Une sous-étape d'affichage au cours de laquelle la zone défile sur l'écran à une vitesse donnée;
- Suivi, suite à l'affichage, d'une sous-étape de réalisation d'un effet d'éloignement de la zone affichée.

On a vu dans ce qui précède qu'une zone et l'écran ont des formes rectangulaires ayant deux côtés verticaux et deux côtés horizontaux respectifs. Pour la réalisation du deuxième mode de réalisation, le terminal comprend des moyens pour choisir un niveau de zoom de telle sorte que le côté horizontal d'une zone ait une longueur correspondant à la longueur du côté horizontal de l'écran.

Le terminal comprend aussi des moyens pour réaliser un défilement d'une zone selon un axe horizontal si le côté horizontal de la zone a une longueur supérieure au côté horizontal de l'écran.

Enfin, le terminal comprend aussi des moyens pour respecter l'ordre des zones sélectionnées lors de l'étape de création lors des affichages successifs des zones.

## Revendications

1. Procédé d'affichage d'un contenu numérique (CNT) sur un écran (ECR) d'un terminal (TRM), **caractérisé en ce qu'il** comprend les étapes suivantes:
- une étape de création de zones (ET12,ET22) issues du contenu ;
- une étape d'affichage (ET14-1,ET24-1) des zones successivement sur l'écran.

2. Procédé selon la revendication 1, **caractérisé en ce qu'**à une zone est associé un niveau de zoom respectif de façon à afficher successivement les zones avec le niveau de zoom respectif.

3. Procédé selon les revendications 1 et 2, **caractérisé en ce que** l'étape d'affichage des zones comprend pour chaque zone à afficher les étapes suivantes
- Une sous-étape de réalisation d'un effet de rapprochement pour afficher une zone (Zn) avec le niveau de zoom prédéfini associé à la zone en question;
- Une sous-étape d'affichage au cours de laquelle la zone défile sur l'écran à une vitesse donnée;
- Suivi, suite à l'affichage, d'une sous-étape de réalisation d'un effet d'éloignement de la zone affichée.

4. Procédé selon la revendication 1, **caractérisé en ce qu'**une zone et l'écran ont des formes rectangulaires ayant deux côtés verticaux et deux côtés horizontaux respectifs, et **en ce que** le niveau de zoom pour une zone est choisi de telle sorte que le côté horizontal d'une zone ait une longueur correspondant à la longueur du côté horizontal de l'écran.

5. Procédé selon la revendication 1, **caractérisé en ce qu'**une zone et l'écran ont des formes rectangulaires ayant deux côtés verticaux et deux côtés horizontaux respectifs, et **en ce que** si le côté horizontal de la zone a une longueur supérieure au côté horizontal de l'écran, un défilement de la zone selon un axe horizontal est effectué.

6. Procédé selon la revendication 1, **caractérisé en ce que** les zones sont affichées successivement en respectant l'ordre des zones sélectionnées lors de l'étape de création.

7. Terminal comprenant un écran pour la visualisation d'un contenu numérique, **caractérisé en ce qu'il** comprend
- des moyens de création de zones (Z1,Z2,Z3) issues du contenu (CNT)
- des moyens d'affichage des zones successivement.

8. Programme d'ordinateur apte à être mise en oeuvre sur un terminal tel que défini dans la revendication 7, ledit programme comprenant des instructions de code qui, lorsque le programme est exécuté par un processeur, réalise les étapes définies dans la revendication 1.
